# EUROPEAN PATENT APPLICATION

(11) **EP 2 525 582 A2**
(43) Date of publication of application: **21.11.2012**
(21) Application number: 11190016.3
(22) Date of filing: 21.11.2011
(51) Int. Cl.: H04N 13/02

(54) **Apparatus and Method for Converting 2D Content into 3D Content, and Computer-Readable Storage Medium Thereof**

(30) Priority: 16.05.2011 KR 20110045843
(71) Applicant: Samsung Electronics Co., Ltd., Suwon-si, Gyeonggi-do, 443-742 (KR)
(72) Inventor: Kwon, Oh-yun, Seoul (KR); Heo, Hye-hyun, Gyeonggi-do (KR)
(74) Representative: Clark, David James

(57) **Abstract**

Provided are an apparatus and a method for converting 2D contents into high quality 3D contents at a low cost, and a computer-readable medium thereof. The method of converting the 2D contents into the 3D contents through a content converting apparatus includes: selecting a key frame from among plural frames of 2D contents that are video contents; extracting an object from the selected key frame; assigning depth to the extracted object for conversion into 3D contents; performing tracking on another frame other than the key frame from among the plural frames; and performing rendering on the key frame and the other frame. Accordingly, it is possible to convert 2D contents into high quality 3D contents at a low cost.

## Description

### BACKGROUND

### 1. Field

Apparatuses and methods consistent with exemplary embodiments relate to an apparatus and method for converting contents, and a computer-readable medium thereof, and more particularly to an apparatus and method for converting two-dimensional (2D) contents into three-dimensional (3D) contents, and a computer-readable medium thereof.

### 2. Description of the Related Art

Video contents such as movies, dramas, sports, etc., are reproduced in a television, a personal computer, a smart phone, a smart pad, a portable multimedia player (PMP), an MP3 player, or the like display apparatus capable of reproducing contents.

With recent developments of display technologies for a three-dimensional (3D) image, such contents have been made into 3D contents and reproduced by a display apparatus capable of displaying a 3D image.

However, there is a shortage of high quality 3D contents since a large scale apparatus and development manpower are needed and high costs and amounts of time are taken in order to make such 3D contents.

### SUMMARY

Accordingly, one or more exemplary embodiments provide an apparatus and method for converting 2D contents into high quality 3D contents at a low cost, and a computer-readable medium thereof.

According to an aspect of an exemplary embodiment, there is provided a method of converting 2D contents into 3D contents through a content converting apparatus, the method including: selecting a key frame from among plural frames of 2D contents that are video contents; extracting an object from the selected key frame; assigning depth to the extracted object for conversion into 3D contents; performing tracking on another frames other than the key frame from among the plural frames; and performing rendering on the key frame having the object assigned with the depth and the other frame on which the tracking is performed.

The selecting the key frame may include selecting the key frame on the basis of motion of an image in the frame.

The performing the tracking may include assigning depth to the other frame on the basis of the depth assigned to the key frame.

At least one of the extracting the object and the assigning the depth may be performed on the basis of information about contents and development of a scene in the frame to be processed.

At least one of the extracting the object and the assigning the depth may be performed in accordance with an input of a user.

The method may further include performing a 3D picture quality operation on the rendered key frame and the rendered other frame.

According to an aspect of another exemplary embodiment, there is provided an apparatus for converting 2D contents into 3D contents, the apparatus including: a converter which selects a key frame from among plural frames of 2D contents that are video contents; extracts an object from the selected key frame; assigns depth to the extracted object for conversion into 3D contents; performs tracking on another frame other than the key frame from among the plural frames; and performs rendering on the key frame having the object assigned with the depth and the other frame on which the tracking is performed.

The converter may select the key frame on the basis of motion of an image in the frame.

The converter may perform the tracking by assigning depth to the other frame on the basis of the depth assigned to the object of the key frame.

The converter may perform at least one of extracting the object and assigning the depth on the basis of information about contents and development of a scene in the frame to be processed.

The apparatus may further include a user input unit to receive an input of a user, wherein the converter performs at least one of extracting the object and assigning the depth in accordance with the input of the user.

The converter may further perform a 3D picture quality operation on the rendered key frame and the rendered other frame.

According to an aspect of another exemplary embodiment, there is provided a computer-readable storage medium having instructions executable by a computer, wherein the instructions perform a method of converting 2D contents into 3D contents when the instructions are implemented by a processor of the computer, the method including: selecting a key frame from among plural frames of 2D contents that are video contents; extracting an object from the selected key frame; assigning depth to the extracted object for conversion into 3D contents; performing tracking on another frame other than the key frame from among the plural frames; and performing rendering on the key frame having the object assigned with the depth and the other frame on which the tracking is performed.

The selecting the key frame may include selecting the key frame on the basis of motion of an image in the frame.

The performing the tracking may include assigning depth to the other frame on the basis of the depth assigned to the object of the key frame.

At least one of the extracting the object and the assigning the depth may be performed on the basis of information about contents and development of a scene in the frame to be processed.

At least one of the extracting the object and the assigning the depth may be performed in accordance with an input of a user.

The method may further include performing a 3D picture quality operation with regard to the rendered key frame and the rendered other frame.

According to an aspect of another exemplary embodiment, there is provided a method of converting 2D contents into 3D contents through a content converting apparatus, the method including: determining a key frame from among plural frames of the 2D contents, the 2D contents being video contents; and assigning depth to another frame, from among the plural frames, according to depth assigned to an object of the key frame.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram showing a configuration of a content converting apparatus according to an exemplary embodiment;
FIG. 2 is a flowchart showing an operation of a content converting apparatus according to an exemplary embodiment;
FIG. 3 shows a selection of a key frame in a content converting apparatus according to an exemplary embodiment; and
FIG. 4 is a flowchart showing an operation of a content converting apparatus according to another exemplary embodiment.

### DETAILED DESCRIPTION OF EXEMPLARY EMBODIMENTS

Below, exemplary embodiments will be described in detail with reference to accompanying drawings. Hereinafter, expressions such as "at least one of," when preceding a list of elements, modify the entire list of elements and do not modify the individual elements of the list.

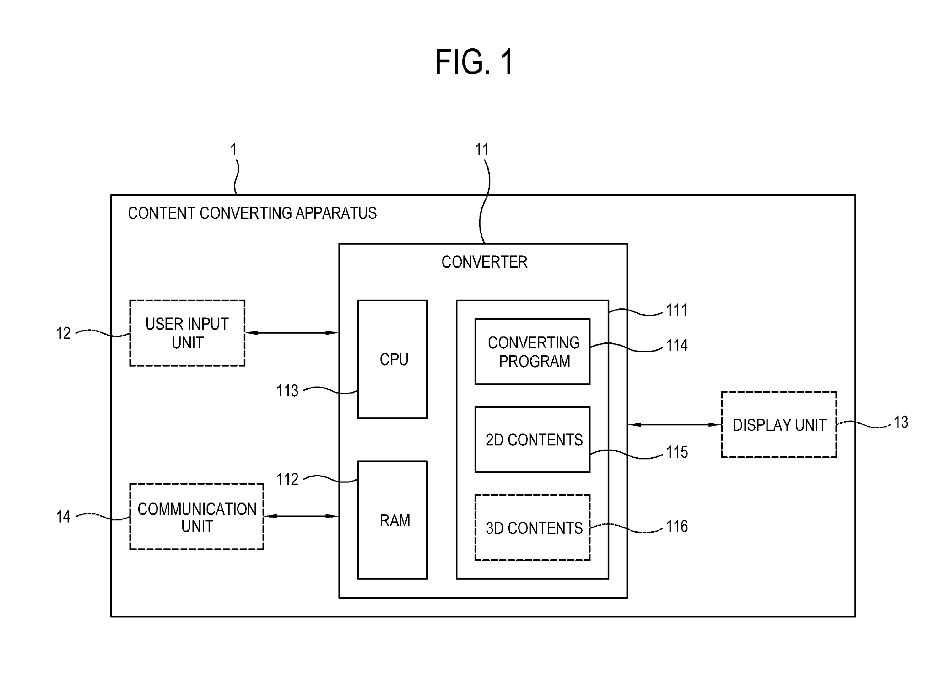

FIG. 1 is a block diagram showing a configuration of a content converting apparatus 1 according to an exemplary embodiment. The content converting apparatus 1 converts two-dimensional (2D) contents into three-dimensional (3D) contents. In the present exemplary embodiment, the contents include moving picture contents, for example, movies, dramas, sports, etc.

The content converting apparatus 1 may receive 2D contents to be converted into 3D contents from a predetermined 2D content provider (not shown). The content converting apparatus 1 may receive 2D contents from the 2D content provider through a predetermined network (not shown). For example, the 2D content provider may be a network server which stores 2D contents and transmits the 2D contents to the content converting apparatus 1 as requested by the content converting apparatus 1.

According to another exemplary embodiment, the content converting apparatus 1 may receive 2D content from the 2D content provider through a data transfer method or mechanism other than the network. For example, the 2D content provider may be a device provided with a storage unit such as a hard disk, a flash memory, etc., for storing 2D contents, which is locally connected to the content converting apparatus 1 and transmits 2D contents to the content converting apparatus 1 as requested by the content converting apparatus 1. In this case, there is no limit to a method of locally connecting the content converting apparatus 1 and the 2D content provider as long as the method is for transmitting data of 2D contents. For example, the local connection method may include universal serial bus (USB) or the like.

According to still another exemplary embodiment, the content converting apparatus 1 may receive 2D contents from a 3D content provider (not shown). For example, the 3D content provider may transmit 2D contents to the content converting apparatus 1, receive 3D contents converted by the content converting apparatus 1, and provide the received 3D contents to a predetermined user terminal (not shown). The user terminal is capable of displaying 3D contents received from the content converting apparatus 1 as a 3D image. For example, the user terminal may include a television (TV), a personal computer (PC), a smart phone, a smart pad, a PMP, an MP3 player, etc.

According to still another exemplary embodiment, the content converting apparatus 1 may transmit the converted 3D contents to the user terminal capable of displaying the 3D contents as a 3D image. For example, the content converting apparatus 1 may provide 3D contents to the user terminal through a network.

In the network according to the present exemplary embodiment, there is no limit to a network communication method such as a wired and/or wireless communication method as long as the method is for data communication to transmit at least one of 2D contents and 3D contents. The network communication method includes any known communication methods.

As shown in FIG. 1, the content converting apparatus 1 may include a converter 11 and a communication unit 14. The converter 11 converts 2D contents into 3D contents. The 2D contents include a plurality of video frames (hereinafter, referred to as a 'frame'). The 3D contents are based on a viewer's binocular parallax, which may include a plurality of left-eye frames and a plurality of right-eye frames. Among the plurality of left-eye frames and the plurality of right-eye frames, a pair including a left-eye frame and a right-eye frame may be respectively converted from at least one corresponding frame among the plurality of frames of the 2D contents. The conversion from 2D contents into 3D contents (hereinafter, referred to as '2D-3D conversion'), performed by the converter 11, will be described in detail below.

The communication unit 14 may perform at least one of data communication between the 2D content provider and the content converting apparatus 1, data communication between the 3D content provider and the content converting apparatus 1, and data communication between the user terminal and the content converting apparatus 1.

The converter 11 may include a storage unit 111, a random access memory (RAM) 112, and a central processing unit (CPU) 113. The storage unit 111 may store a converting program 114 for performing 2D-3D conversion, 2D contents 115 to be converted, and 3D contents 116 converted from 2D contents. The storage unit 111 may be achieved by a non-volatile memory such as a hard disk, a flash memory, etc. The RAM 112 is loaded with at least a part of the converting program 114 when the converter 11 operates, and the CPU 113 executes the converting program 114 loaded into the RAM 112. The converting program 114 has instructions executable by the CPU 113. The storage unit 111 is an example of a computer-readable storage medium.

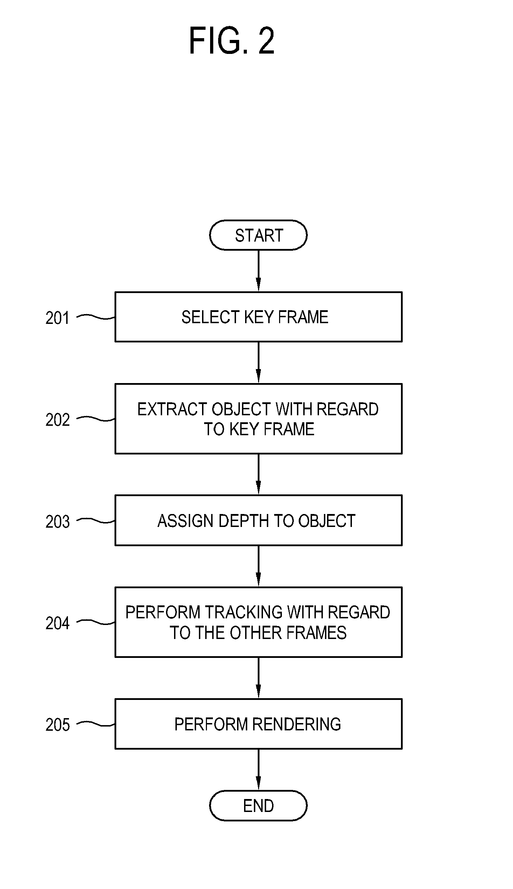

FIG. 2 is a flowchart showing an operation of a content converting apparatus 1 according to an exemplary embodiment. The operation (hereinafter, referred to as a '2D-3D converting process') of the content converting apparatus 1 may correspond to a content converting method performed by instructions of the converting program 114. In the present exemplary embodiment, the 2D-3D converting process may include a key frame selection operation 201, an object extraction operation 202, a depth assignment operation 203, a tracking operation 204 and a rendering operation 205.

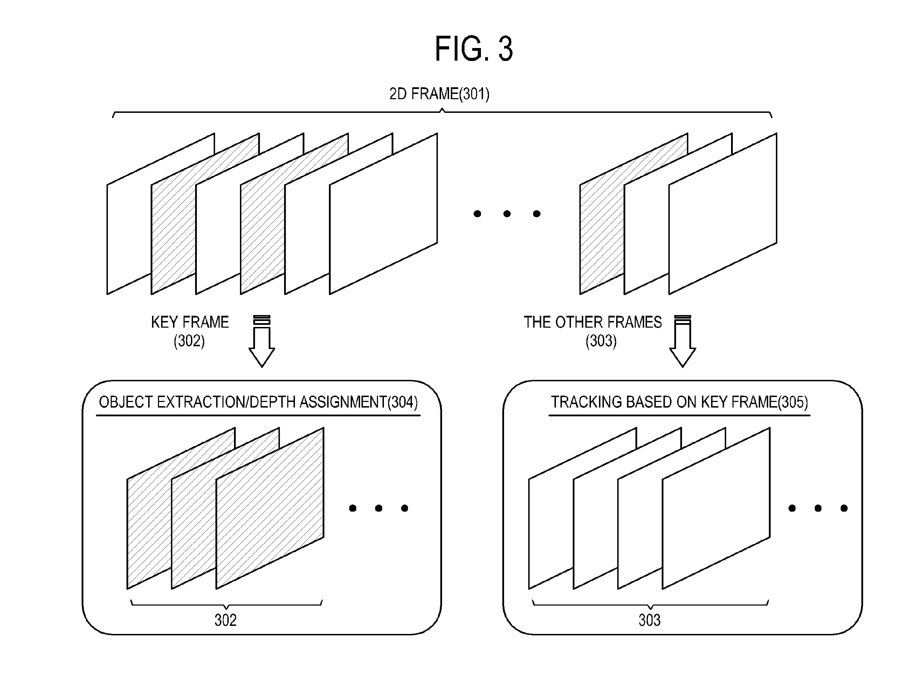

First, in the key frame selection operation 201, a random key frame is selected among plural frames of 2D contents. FIG. 3 shows a selection of a key frame in a content converting apparatus according to an exemplary embodiment. Reference numeral 301 indicates plural frames of 2D contents to be converted. Reference numeral of 302 indicates a frame selected as the key frame among the plural frames 301, and reference numeral of 303 indicates the other frames. As the key frame 302, a frame representing contents of an image may be selected among the plural frames 301 of the 2D contents. For example, the key frame 302 may include a frame where a scene is switched, a frame where a main character of a scene is closed up, etc. The key frame 302 may be selected on the basis of motion of an image in the corresponding frame. For example, a frame of which motion of an image is equal to or higher than a predetermined value may be selected as the key frame 302.

Referring back to FIG. 2, in the object extraction operation 202, an object to which a 3D effect will be reflected is extracted with regard to the selected key frame 302 (refer to 304 of FIG. 3). The object may be a main image contained in the scene of each frame and, for example, may be an image of a main character in a scene where the main character appears, an image of a vehicle in a scene where a vehicle moves, etc. In the object extraction operation 202, an image of a corresponding frame is segmented so that a boundary of an object can be extracted from segmentation results.

In the depth assignment operation 203, depth is assigned to the object extracted by the object extraction operation 202 (refer to 304 of IG. 3). The depth is a parameter for realizing a 3D visual effect, which is used for shifting the object leftward and rightward by an assigned parameter in generated corresponding left-eye and right-eye frames. In the depth assignment operation 203, a previously given standardized template may be used for depth assignment.

In the tracking operation 204, a left-eye frame and a right-eye frame are generated corresponding not to the key frame 302, but to the other frames 303 (refer to 305 of FIG. 3). The tracking 204 may be performed with reference to the object extraction operation 202 and the depth assignment operation 203 performed with regard to the key frame 302.

As described above, according to the present exemplary embodiment, the main key frame 302 is selected and the object extraction operation 202 and the depth assignment operation 203 are performed with respect to the selected key frame 302. Also, the tracking 204 is applied to the other frames 303 with reference to the selected key frame 302. Thus, the converting process is efficient in cost and time and can be performed while keeping the quality high.

In the rendering operation 205, image processing for a completed 3D image is performed with regard to the left-eye and right-eye frames resulting from the depth assignment operation 203 and the tracking operation 204. For example, the rendering operation 205 may include a process for filling a blank area generated as an object is shifted in an image of a frame (i.e., inpainting), etc.

According to the present exemplary embodiment, at least one of the 2D-3D converting process operations may be performed on the basis of information about contents and developments of a scene of a frame to be processed (hereinafter, referred to as 'storytelling information'). The storytelling information is information to be used in realizing 3D visual effects corresponding to story development of contents in accordance with an intention of a content producer. In the present exemplary embodiment, the object extraction operation 202, the depth assignment operation 203, or the like operations may be performed on the basis of the storytelling information. As an example of using the storytelling information, in a scene where two characters have a dialogue with each other, if another main character passes behind the two characters, this main character may be extracted as an object of a corresponding frame, or depth may be fully applied to the extracted object of this main character. In this example, the storytelling information may include information about an image of another main character to extract an object, or a vale representing an importance degree on story development to assign the depth, etc., which may be previously provided corresponding to a relevant frame and stored in the storage unit 111. The converter 11 may perform a conversion process operation with reference to the storytelling information stored in the storage unit 111.

At least one operation of the 2D-3D converting process according to an exemplary embodiment may include a manual operation implemented in accordance with a user's input, and an automatic operation implemented in accordance with preset reference information. For example, in the object extraction operation 202, the depth assignment operation 203, or the like operations, some frames may be processed by manual operations while other frames may be processed by automatic operations.

In the manual operations, the converting process operations may be performed in accordance with an input of a user (or a developer of performing a content converting operation). The content converting apparatus 1 may further include a user input unit 12 such as a keyboard, a mouse, a tablet, etc., for the input of a user. Also, the content converting apparatus 1 may further include a display unit 13 such as a monitor or the like that displays an image being converted so that a user can observe a progression of the converting process. In order to receive a user's input effectively, the content converting apparatus 1 may display a graphic user interface (GUI, not shown) containing an image of a processed frame, a predetermined input menu, etc., on the display unit 13. A user may enter an input for the converting process through the input menu or the like of the GUI while ascertaining an image of a frame displayed on the display unit 13. For instance, a user may enter an input for extracting an object through the input menu or the like of the GUI while ascertaining the object contained in an image of a frame.

In the automatic operations, the operations are performed on the basis of the preset reference information. For example, in the object extraction operation 202, the content converting apparatus 1 may analyze an image of a frame and select an object, of which variation in a pixel value on a boundary of a certain object within the image is equal to or higher than a predetermined threshold value, as an object to be extracted. Here, the reference information may be a threshold value for the variation in the pixel value on the boundary of the object, by which the object can be selected to be extracted.

In the present exemplary embodiment, the 2D-3D converting process operations may be performed in accordance with a quality of 3D contents. In a certain 2D-3D converting process, the quality of 3D contents may indicate how much percentage each of the manual operations and the automatic operations are. For example, in the object extraction operation 202, the manual operations and the automatic operations may each constitute half of the object extraction operation 202. The quality of 3D contents may be represented as a proportion (hereinafter, referred to as a 'combination proportion') of the automatic operations (or the manual operations) in the whole of a certain 2D-3D converting process operation. In a certain 2D-3D converting process operation, whether to perform the automatic operation or the manual operation may be determined per frame.

The quality of 3D contents may include a plurality of quality modes. Thus, the 2D-2D converting process may be performed corresponding to one selected among the plurality of quality modes. The plurality of quality modes may include a simple mode, a basic mode, an advanced mode and an expert mode in order of higher quality. For example, these quality modes may have combination proportions (e.g., the proportions of the automatic operations) of more than 85%, 85%, 70% and 50%, respectively, in the whole corresponding operation.

The quality of 3D contents may be determined in accordance with the kinds or formats of 2D contents. For example, if the 2D contents are recently released movies, relatively high quality may be determined for the 2D contents. On the other hand, if the 2D contents are old movies, relatively low quality may be determined for the 2D contents. According to another exemplary embodiment, if the movie is a grand scale blockbuster, relatively high quality may be determined for the movie. On the other hand, the relatively low quality may be determined for a story-oriented movie. According to still another exemplary embodiment, the quality of 3D contents may be determined in accordance with genres of contents such as sports, movies, drama, etc. According to still another exemplary embodiment, the quality of 3D contents may be determined in accordance with a user's input. The user's input for determining the quality of 3D contents may be received through the user input unit 12 or received from another device via the communication unit 14.

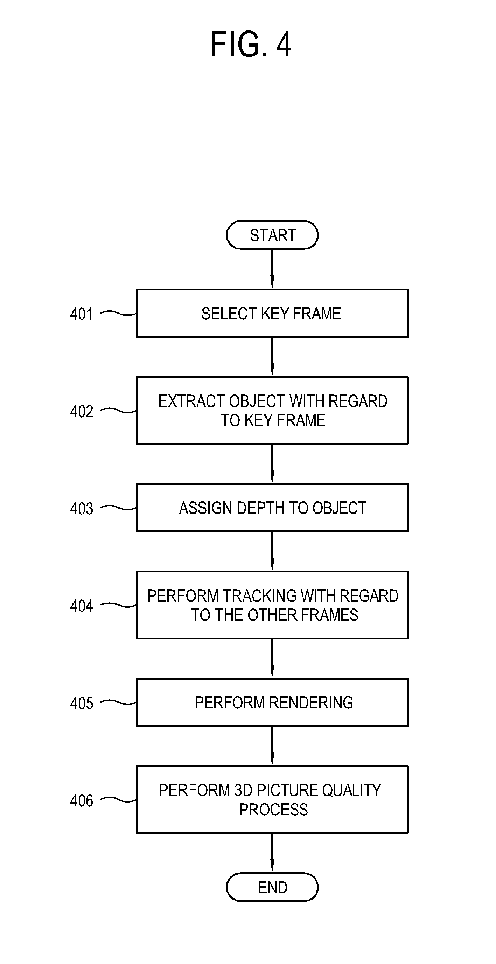

FIG. 4 is a flowchart showing an operation of a content converting apparatus 1 according to another exemplary embodiment. Regarding the content converting apparatus 1 described with reference to FIG. 4, the same or similar configurations as the content converting apparatus 1 described with reference to FIG. 3 will be omitted. The 2D-3D converting process operations performed by the content converting apparatus 1 of FIG. 4 may include a key frame selection operation 401, an object extraction operation 402, a depth assignment operation 403, a tracking operation 404, a rendering operation 405, and a 3D picture quality operation 406.

First, in the key frame selection operation 401, a random key frame is selected among plural frames of 2D contents. In the object extraction operation 402, an object is extracted with regard to the selected key frame. In the depth assignment operation 403, depth is assigned to the object extracted in the object extraction operation 402. In the tracking operation 404, a left-eye frame and a right-eye frame are generated corresponding to other frames other than the key frame. In the rendering operation 405, image processing for a completed 3D image is performed with regard to the left-eye and right-eye frames resulting from the depth assignment operation 403 and the tracking operation 404.

In the 3D picture quality operation 406, the 3D picture quality operation is performed with regard to the frames resulting from the rendering operation 405. The 3D picture quality operation 406 may include at least one of contrast enhancement, detail enhancement, etc. Through the 3D picture quality operation 406, improvement of picture quality can be achieved when the 3D contents are actually displayed, so that the picture quality can be optimized to a display apparatus.

As described above, it is possible to convert 2D contents into high quality 3D contents at a low cost.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units of the content converting apparatus 1 can include a processor or microprocessor executing a computer program stored in a computer-readable medium.

Although a few exemplary embodiments have been shown and described, it will be appreciated by those skilled in the art that changes may be made in these exemplary embodiments without departing from the principles of the inventive concept, the scope of which is defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of converting two-dimensional (2D) contents into three-dimensional (3D) contents through a content converting apparatus, the method comprising:
selecting a key frame among plural frames of 2D contents that are video contents;
extracting an object from the selected key frame;
assigning depth to the extracted object for conversion into 3D contents;
performing tracking on other frames other than the key frame among the plural frames;
and
performing rendering on the key frame having the object assigned with the depth and the other frames on which the tracking is performed.

2. The method according to claim 1, wherein the selecting the key frame comprises selecting the key frame according to motion of an image in the frame.

3. The method according to claim 1 or 2, wherein the performing the tracking comprises assigning depth to the other frames according to the depth assigned to the object of the key frame.

4. The method according to one of claims 1 to 3, wherein at least one of the extracting the object and the assigning the depth is performed according to information about contents and development of a scene in the frame to be processed.

5. The method according to one of claims 1 to 4, wherein at least one of the extracting the object and the assigning the depth is performed in accordance with an input of a user.

6. The method according to one of claims 1 to 5, further comprising performing a 3D picture quality process on the plural frames on which the rendering is performed.

7. An apparatus for converting 2D contents into 3D contents, the apparatus comprising: a converter which selects a key frame among plural frames of 2D contents that are video contents; extracts an object from the selected key frame; assigns depth to the extracted object for conversion into 3D contents; performs tracking on other frames other than the key frame among the plural frames; and performs rendering on the key frame having the object assigned with the depth and the other frames on which the tracking is performed.

8. The apparatus according to claim 7, wherein the converter selects the key frame according to motion of an image in the frame.

9. The apparatus according to claim 7 or 8, wherein the converter performs the tracking by assigning depth to the other frames according to the depth assigned to the object of the key frame.

10. The apparatus according to one of claims 7 to 9, wherein the converter performs at least one of extracting the object and assigning the depth according to information about contents and development of a scene in the frame to be processed.

11. The apparatus according to one of claims 7 to 10, further comprising a user input unit to receive an input of a user,
wherein the converter performs at least one of extracting the object and assigning the depth in accordance with the input of the user.

12. The apparatus according to one of claims 7 to 11, wherein the converter further performs a 3D picture quality process on the plural frames on which the rendering is performed.
